# EUROPÄISCHE PATENTSCHRIFT

(11) **EP 3 404 230 B1**
(45) Veröffentlichungstag und Bekanntmachung des Hinweises auf die Patenterteilung: **26.04.2023**
(21) Anmeldenummer: 18171442.9
(22) Anmeldetag: 09.05.2018
(51) Int. Cl.: F02B 37/24, F01D 17/16, F04D 27/02, F02D 23/00, F02D 41/00, F02M 26/06, F02D 41/10, F02B 37/12

(54) **VERFAHREN ZUM BETREIBEN EINER BRENNKRAFTMASCHINE**
METHOD OF CONTROLLING AN INTERNAL COMBUSTION ENGINE
PROCÉDÉ DE COMMANDE D'UN MOTEUR À COMBUSTION INTERNE

(30) Priorität: 16.05.2017 DE 102017208189
(43) Veröffentlichungstag der Anmeldung: 21.11.2018
(73) Patentinhaber: VOLKSWAGEN AKTIENGESELLSCHAFT, 38440 Wolfsburg (DE)
(72) Erfinder: Bartolome, Javier, 38102 Braunschweig (DE); Woelke, Detlef, 38518 Gifhorn (DE); Koehler, Ingo, 38104 Braunschweig (DE); Weiß, Mathias, 38104 Braunschweig (DE)

(56) Entgegenhaltungen:
- WO-A1-2008/144307
- DE-A1-102015 011 180
- US-A1- 2004 050 375
- Jens-Achim Kessel: "Modellbildung von Abgasturboladern mit variabler Turbinengeometrie an schnellaufenden Dieselmotoren", , 6. Juni 2003 (2003-06-06), XP055488932, Gefunden im Internet: URL:http://tuprints.ulb.tu-darmstadt.de/43 4/1/Kessel_Mod-ATL-VTG_Diss2003.pdf [gefunden am 2018-06-28]
- Georges Salameh: "Caractérisation expérimentale d'une turbine de suralimentation automobile et modélisation de ses courbes caractéristiques de fonctionnement", , 15. November 2017 (2017-11-15), XP055489000, Gefunden im Internet: URL:https://hal.archives-ouvertes.fr/tel-0 1635671/document [gefunden am 2018-06-29]

## Beschreibung

Die Erfindung betrifft ein Verfahren zum Betreiben einer Brennkraftmaschine. Die Erfindung betrifft weiterhin ein Computerprogramm zum Ausführen eines solchen Verfahrens.

Es ist bekannt, Brennkraftmaschinen, die beispielsweise zum Antrieb von Kraftfahrzeugen vorgesehen sind, aufzuladen, um die spezifische Leistung zu erhöhen und den spezifischen Kraftstoffverbrauch zu senken. Weit verbreitet ist eine Aufladung von Brennkraftmaschinen mittels eines oder mehrerer Abgasturbolader. Diese umfassen eine Turbine mit einem Turbinenlaufrad, das von Abgas, das von einem Verbrennungsmotor der Brennkraftmaschine ausgestoßen wurde, angeströmt und dadurch drehend angetrieben wird. Das Turbinenlaufrad treibt über eine Welle ein Verdichterlaufrad eines Verdichters an, der in einen Frischgasstrang des Verbrennungsmotors integriert ist und dadurch das Frischgas verdichtet. Alternativ kann ein solcher Verdichter auch mittels eines anderen Antriebs, beispielsweise von dem Verbrennungsmotor selbst oder von einem elektrischen Antriebsmotor, angetrieben werden. Durch die Aufladung kann u.a. die Menge des in die Brennräume des Verbrennungsmotors eingebrachten Frischgases und damit die Menge des in einem Arbeitsspiel in dem Brennraum umsetzbaren Kraftstoffs erhöht werden.

Bei der Auslegung einer Turbine eines Abgasturboladers sollte ein bestmöglicher Kompromiss zwischen dem Ansprechverhalten, dem Verhalten bei Teillastbetrieb und dem Verhalten im Nennleistungsbetrieb der Brennkraftmaschine gefunden werden. Für ein gutes Ansprech- und Teillastverhalten sollten bereits kleine Abgasmassenströme und damit Abgasenthalpieströme gute Wirkungsgrade und spezifisch hohe Turbinenleistungen bewirken. Dies kann prinzipiell durch eine geometrische Auslegung der Turbine mit relativ geringer Baugröße und entsprechend geringem Massenträgheitsmoment des Turbinenlaufrads erreicht werden. In einem Betrieb der Brennkraftmaschine mit Nennleistung sollte dagegen möglichst der gesamte Abgasmassenstrom bei einem moderaten Druckverhältnis durch die Turbine geleitet werden können. Dies erfordert prinzipiell eine geometrische Auslegung der Turbine mit einer relativ großen Baugröße. Dieser Zielkonflikt bedingt in der Praxis einen Kompromiss bei der geometrischen Auslegung der Turbine, um einen Betrieb des Abgasturboladers über den gesamten Betriebsbereich der Brennkraftmaschine zu ermöglichen.

Um eine Überdrehzahl der Turbine und damit auch des Verdichters des Abgasturboladers infolge zu hoher Abgasmassenströme zu verhindern können zudem Regelvorrichtungen eingesetzt werden. Von mittels Abgasturboladern aufgeladenen Ottomotoren ist zum einen die Verwendung eines sogenannten Wastegates als Regelvorrichtung bekannt. Hierbei handelt es sich um einen die Turbine umgehenden Bypass für das Abgas, wobei die Menge des über den Bypass geführten Abgases mittels eines Bypassventils steuerbar ist. Bei einem für die Turbine zu hohen Abgasmassenstrom wird ein Teil des Abgases mittels des Wastegates an der Turbine vorbeigeführt und dadurch die in der Turbine in mechanische Energie umgesetzte Abgasenthalpie begrenzt.

Bei Dieselmotoren und zunehmend auch bei Ottomotoren ist zum anderen die Verwendung von Abgasturboladern verbreitet, die eine Vorrichtung zur variablen Turbinenanströmung (VTG) umfassen, die zumeist verstellbare Leitschaufeln eingangsseitig der Turbine aufweisen. Durch eine angepasste Verstellung der Leitschaufeln wird zum einen der freie Strömungsquerschnitt im Einlasskanal der Turbine verändert, wodurch insbesondere bei niedrigen Abgasmassenströmen die Strömungsgeschwindigkeit beim Eintritt des Abgases in den das Turbinenlaufrad aufnehmenden Laufradraum erhöht werden kann. Zum anderen kann der Winkel der Anströmung der Schaufeln des Turbinenlaufrads angepasst werden, was ebenfalls eine Erhöhung des Turbinenwirkungsgrads bewirken kann.

Im Betrieb von Brennkraftmaschinen kann weiterhin eine Niederdruckabgasrückführung (ND-AGR) vorgesehen sein, um gesetzlich vorgeschriebene Emissionsgrenzwerte einzuhalten. Das stromab einer Turbine eines Abgasturboladers entnommene Abgas wird dabei über eine Rückführleitung vor dem Verdichter des Abgasturboladers in den Frischgasstrang eingeleitet und von dem Verdichter mit Frischgas angesaugt. Für die Steuerung der Menge des rückgeführten Abgases ist in die Rückführleitung für die ND-AGR ein Regelventil integriert.

Bei einer Brennkraftmaschine mit einem Dieselmotor dient eine Abgasrückführung primär einem Geringhalten von Stickoxidemissionen, indem durch das rückgeführte Abgas der Anteil des jeweils in einem Arbeitstakt in den Brennräumen umsetzbaren Sauerstoffs und damit die Brennraumtemperatur relativ gering gehalten wird. Dieses Ziel steht jedoch regelmäßig in einem Konflikt mit dem weiteren Ziel, auch die Partikelemissionen gering zu halten, die tendenziell durch in den Brennräumen unter Sauerstoffmangel ablaufende Brennprozesse gefördert wird. Grundsätzlich sollte daher der Anteil des rückgeführten Abgases an der Gesamtmenge an Gas, das in den Brennräumen umgesetzt wird, mit steigender Last, mit dem der Verbrennungsmotor der Brennkraftmaschine betrieben wird, reduziert werden. Zur Einhaltung aktueller Emissionsgrenzwerte kann es jedoch erforderlich sein, eine Abgasrückführung möglichst im gesamten Betriebskennfeld der Brennkraftmaschine vorzusehen.

Die DE 10 2010 032 510 A1 beschreibt ein Verfahren zum Betreiben einer mittels eines Abgasturboladers aufgeladenen Brennkraftmaschine, bei dem beim Erreichen von Resonanzfrequenzen die Drehzahl des Abgasturboladers angepasst wird, um Beschädigungen zu vermeiden. Offenbart ist weiterhin, dass eine entsprechend betriebene Brennkraftmaschine eine Vorrichtung zur variablen Turbinenanströmung (VTG) aufweisen kann. Weiterhin soll diese eine Rückführleitung für eine Niederdruckabgasrückführung aufweisen können.

Eine Brennkraftmaschine mit Verbrennungsmotor, Frischgasstrang, Abgasstrang, Abgasturbolader und Rückführleitung für eine Niederdruckabgasrückführung ist jeweils in der DE 10 2015 011 180 A1, der WO 2008/144307 A1 und der US 2004/050375 A1 offenbart. Die US 2004/050375 A1 offenbart weiterhin, dass in den Abgasstrang der Brennkraftmaschine ein SCR-Katalysator integriert sein kann.

Der Erfindung lag die Aufgabe zugrunde, bei einer Brennkraftmaschine mit einem insbesondere als Dieselmotor ausgebildeten Verbrennungsmotor die Entstehung von Stickoxiden im Abgas möglichst gering zu halten.

Diese Aufgabe wird durch ein Verfahren zum Betreiben einer Brennkraftmaschine gemäß dem Patentanspruch 1 gelöst. Ein Computerprogramm zum Ausführen eines solchen Verfahrens ist Gegenstand des Patentanspruchs 6. Bevorzugte Ausführungsformen des erfindungsgemäßen Verfahrens sind Gegenstände der weiteren Patentansprüche und/oder ergeben sich aus der nachfolgenden Beschreibung der Erfindung.

Erfindungsgemäß ist eine Brennkraftmaschine vorgesehen mit
- einem Verbrennungsmotor,
- einem Frischgasstrang,
- einem Abgasstrang,
- einem Abgasturbolader mit einer in den Abgasstrang integrierten Turbine und mit einem in den Frischgasstrang integrierten Verdichter, wobei die Turbine eine Vorrichtung zur variablen Turbinenanströmung (VTG) aufweist, die mittels eines Stellers verstellbar ist, und
- einer Rückführleitung für eine Niederdruckabgasrückführung, die stromab der Turbine aus dem Abgasstrang abgeht und stromauf des Verdichters in den Frischgasstrang mündet,
wobei die Durchströmung der Rückführleitung mittels einer Ventileinrichtung beeinflussbar ist.

Weiterhin ist vorgesehen, dass die Turbine für einen Minflow von < 60kg/h und vorzugsweise von ≤ 50kg/h bei vollständig geschlossener VTG ausgelegt ist.

Als "Minflow" ist dabei erfindungsgemäß die Durchströmung der Turbine mittels Lufts ausgehend von einem Turbineneinlass hin zu einem Turbinenauslass zu verstehen, die sich bei Raumtemperatur (20°C) und einem Differenzdruck (im Turbineneinlass im Vergleich zum Turbinenauslass) von 300 mbar einstellt.

Eine solche Brennkraftmaschine wird erfindungsgemäß derart betrieben, dass
- infolge einer Lasterhöhung im Betrieb des Verbrennungsmotors die VTG vollständig geschlossen und die Durchströmung der Rückführleitung mittels der Ventileinrichtung reduziert und insbesondere beendet wird und
- nach dem Erreichen eines der angeforderten Lasterhöhung entsprechendem Soll-Ladedrucks in dem Frischgasstrang die Durchströmung der Rückführleitung mittels der Ventileinrichtung wieder erhöht wird.

Das erfindungsgemäße Vorgehen basiert auf der Erkenntnis, dass durch über die Rückführleitung für die Niederdruckabgasrückführung rückgeführtes Abgas grundsätzlich die Menge des in einem Arbeitstakt in den Brennräumen umsetzbaren Kraftstoffs reduziert wird, was sich negativ auf die Leistungserzeugung des Verbrennungsmotors auswirkt. Dies gilt insbesondere für die sogenannte Dynamik der Brennkraftmaschine, worunter der Gradient und damit die Geschwindigkeit der Erhöhung des von dem Verbrennungsmotor erzeugten Drehmoments infolge eines Lastsprungs, d.h. einer kurzfristig relativ stark ausgeprägten (insbesondere maximalen) Erhöhung der Lastanforderung, verstanden wird. Es kann daher vorteilhaft sein, unmittelbar nach einem solchen Lastsprung eine Abgasrückführung weitgehend zu reduzieren, um eine möglichst gute Dynamik zu gewährleisten, wohingegen nach dem Erreichen eines der erhöhten Lastanforderung entsprechenden Ladedrucks im Frischgasstrang die Abgasrückführung wieder erhöht wird. Ein solches Vorgehen führt temporär zu relativ hohen Stickoxidemissionen beziehungsweise zu einer erhöhten Belastung einer zur Reduktion der Stickoxidemissionen (vorzugsweise stromab der Turbine) in den Abgasstrang integrierten Abgasnachbehandlungsvorrichtung (insbesondere NOx-Speicherkatalysator und/oder SCR-Katalysator), wie sie bei einer erfindungsgemäß betriebenen Brennkraftmaschine vorzugsweise vorgesehen ist.

Durch den Betrieb einer Brennkraftmaschine gemäß dem erfindungsgemäßen Verfahren wird diese Problematik dadurch abgemildert, dass ein Abgasturbolader eingesetzt wird, dessen Turbine einen relativ kleinen Minflow von < 60 kg/h und vorzugsweise von ≤ 50 kg/h bei vollständig geschlossener VTG aufweist, was deutlich unter dem Minflow vergleichbarer konventioneller Turbinen von Abgasturboladern (zumindest für Brennkraftmaschinen von Kraftfahrzeugen) liegt, deren Minflow häufig bei ca. 80 kg/h liegt. Der relativ kleine Minflow der Turbine des Abgasturboladers einer erfindungsgemäß betriebenen Brennkraftmaschine kann in vorteilhafter Weise ausgenutzt werden, um nach der Lasterhöhung, die insbesondere in Form eines Lastsprungs erfolgt sein kann, durch das Bewirken eines relativ großen Staudrucks einlassseitig der Turbine eine Anströmung eines Turbinenlaufrads der Turbine zu realisieren, die zu einer relativ schnell erfolgenden Erhöhung der Drehzahl des Turbinenlaufrads und damit auch des von dem Turbinenlaufrad angetriebenen Verdichters führt, was in entsprechendem Maße zu einer relativ schnellen Erhöhung des Ladedrucks in dem Frischgasstrang führt. Auf diese Weise wird der der angeforderten Lasterhöhung entsprechende Soll-Ladedruck möglichst schnell erreicht, wodurch die erfindungsgemäß zur Erzielung einer möglichst guten Dynamik reduzierte Abgasrückführung wieder entsprechend schnell erhöht werden kann, was sich insgesamt positiv auf das Emissionsverhalten der Brennkraftmaschine und insbesondere auf den Anteil an Stickoxiden im Abgas auswirkt. Die durch die Lasterhöhung initiierte Phase im Betrieb der Brennkraftmaschine, die infolge einer reduzierten Niederdruckabgasrückführung zu einer temporären Verschlechterung des Emissionsverhaltens führt, kann folglich relativ kurz gehalten werden, was sich insgesamt positiv auf das Emissionsverhalten des Verbrennungsmotors und damit insbesondere auf die Belastung einer in den Abgasstrang integrierten Abgasnachbehandlungsvorrichtung auswirkt.

Gemäß einer bevorzugten Ausgestaltungsform einer erfindungsgemäß betriebenen Brennkraftmaschine kann vorgesehen sein, dass der Steller als E-Steller ausgebildet ist und somit das Verstellen der VTG durch Wandlung von elektrischer Energie in kinetische Energie bewirkt. Ein solcher E-Steller kann insbesondere elektromotorisch oder auf andere Art elektromagnetisch ausgebildet sein. Ein solcher E-Steller ermöglicht im Vergleich zu den zur Verstellung von VTGs verbreiteten pneumatischen Stellern u.a. eine vergleichsweise schnelle Verstellung, wodurch im Rahmen eines erfindungsgemäßen Verfahrens das vollständige Schließen der VTG möglichst schnell realisiert werden kann. Dies führt dementsprechend schnell zu der Erzeugung des Soll-Ladedrucks in dem Frischgasstrang, wodurch wiederum der Zeitraum, in dem die Niederdruckabgasrückführung reduziert ist, um eine möglichst vorteilhafte Dynamik der Brennkraftmaschine zu erreichen, möglichst kurz gehalten werden kann.

Weiterhin können mittels eines E-Stellers relativ einfach und insbesondere bei relativ kleinen Abmessungen im Vergleich zu einem pneumatischen Steller relativ hohe Stellkräfte erzeugt werden, was sich insbesondere dann vorteilhaft auswirken kann, wenn, wie dies vorzugsweise vorgesehen ist, der Steller derart mit der VTG zusammenwirkend ausgebildet ist, dass eine von dem Steller auf die VTG und insbesondere auf Leitschaufeln der VTG ausgeübte Schließkraft einer durch das Abgas erzeugten Öffnungskraft entgegenwirkt. Mittels des Verstellers soll somit die geschlossene Stellung der VTG gegen den Druck des für das Einströmen in die Turbine vorgesehenen Abgases aktiv geschlossen gehalten werden. Dies weist den Vorteil der Realisierung einer sogenannten failsafe-Funktionalität auf, weil bei einer Fehlfunktion des Stellers die VTG durch den Druck des Abgases in eine relativ weit und insbesondere vollständig geöffnete Stellung gedrückt würde, was für einen entsprechenden Notbetrieb der Brennkraftmaschine vorteilhafter als eine vollständig geschlossene Stellung der VTG sein kann. Die relativ hohen Stell- und insbesondere Schließkräfte, die von einem E-Steller im Vergleich zu einem pneumatischen erzeugt werden können, sind diesbezüglich vorteilhaft, weil dadurch ein vollständiges Geschlossenhalten der VTG trotz des erfindungsgemäß vorgesehenen relativ kleinen Minflows, der mit einem relativ hohen Druck des Abgases auf die (weitestmöglich geschlossene) VTG einhergeht, gewährleistet werden kann.

Die Erfindung betrifft auch ein Computerprogramm mit einem Programmcode zum Ausführen eines erfindungsgemäßen Verfahrens, wenn das Computerprogramm auf einer Steuerungsvorrichtung der erfindungsgemäß betriebenen Brennkraftmaschine ausgeführt wird.

Weiterhin kann für eine erfindungsgemäß betriebene Brennkraftmaschine eine Steuerungsvorrichtung mit einem solchen Computerprogramm vorgesehen sein.

Eine erfindungsgemäß betriebene Brennkraftmaschine kann insbesondere zur (direkten oder indirekten) Bereitstellung einer Fahrantriebsleistung für ein Kraftfahrzeug vorgesehen sein. Eine Verwendung bei anderen Kraftfahrzeugen, beispielsweise bei schienengebundenen Kraftfahrzeugen oder Schiffen, ist ebenfalls möglich.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand von in den Zeichnungen dargestellten Ausführungsbeispielen näher erläutert. In den Zeichnungen zeigt:
- Fig. 1:: ein Kraftfahrzeug mit einer erfindungsgemäß betreibbaren Brennkraftmaschine;
- Fig. 2:: in schematischer Darstellung eine erfindungsgemäß betreibbare Brennkraftmaschine und
- Fig. 3:: einen Abgasturbolader für eine erfindungsgemäß betreibbare Brennkraftmaschine in einer teilweise geschnittenen Darstellung.

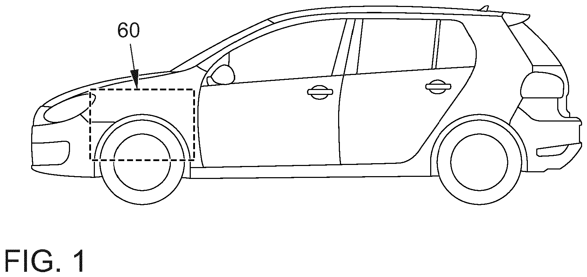

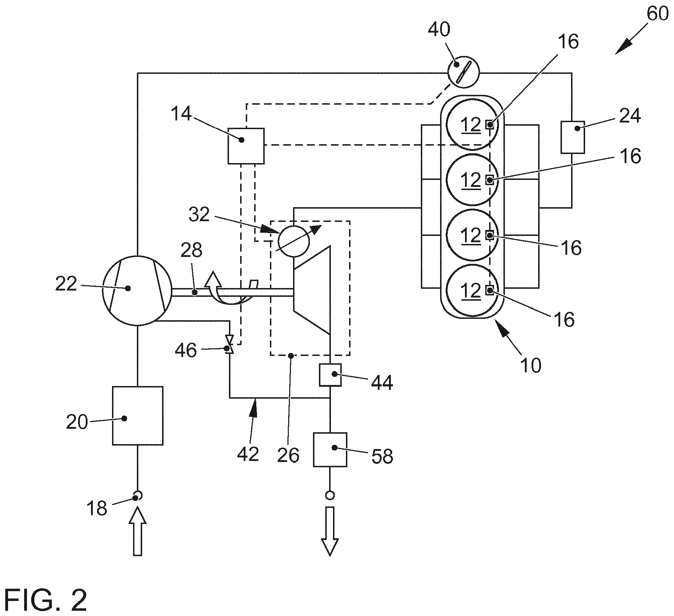

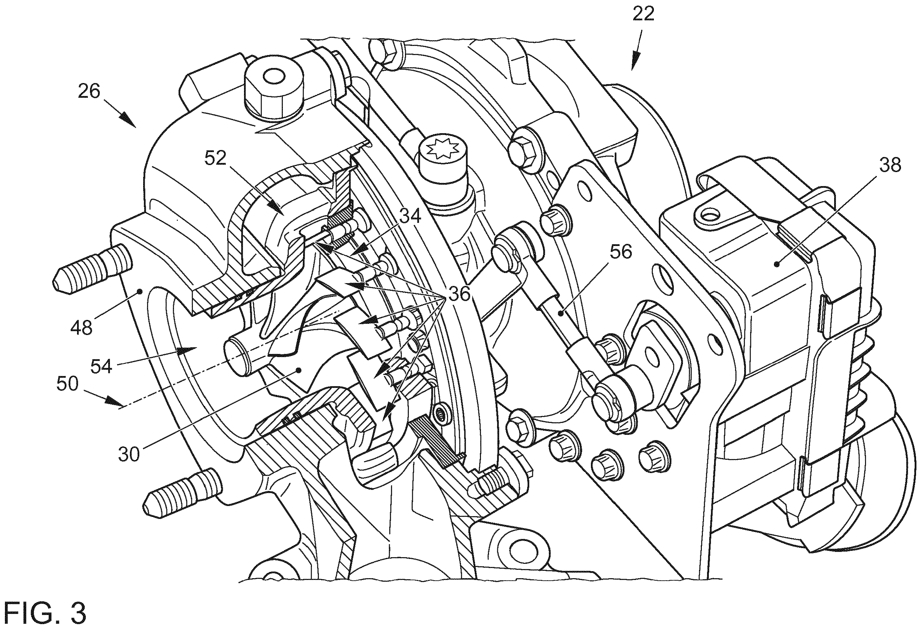

Die Fig. 1 zeigt ein Kraftfahrzeug mit einer erfindungsgemäß betreibbaren Brennkraftmaschine 60, die in den Fig. 2 und 3 in Details dargestellt ist.

Die Fig. 2 zeigt in schematischer Darstellung eine erfindungsgemäß betreibbare Brennkraftmaschine 60 für beispielsweise ein Kraftfahrzeug gemäß der Fig. 1. Diese umfasst einen Verbrennungsmotor 10 (insbesondere Dieselmotor), der eine Mehrzahl von Zylindern 12 ausbildet. Die Zylinder 12 begrenzen gemeinsam mit darin auf und ab geführten Kolben (nicht dargestellt) und einem Zylinderkopf (nicht dargestellt) Brennräume, in denen Frischgas (Luft) gemeinsam mit Kraftstoff verbrannt wird. Der Kraftstoff wird dabei, gesteuert durch eine Steuerungsvorrichtung 14 (Motorsteuerung), mittels Injektoren 16 direkt in die Brennräume eingespritzt. Das Verbrennen des Kraftstoff-Frischgas-Gemischs führt zu zyklischen Auf- und Ab-Bewegungen der Kolben, die wiederum in bekannter Weise über nicht dargestellte Pleuel auf eine ebenfalls nicht dargestellte Kurbelwelle übertragen werden, wodurch die Kurbelwelle rotierend angetrieben wird. Das Frischgas wird dem Verbrennungsmotor 10 über einen Frischgasstrang zugeführt und dazu über eine Ansaugmündung 18 aus der Umgebung angesaugt, in einem Luftfilter 20 gereinigt und anschließend in einen Verdichter 22, der Teil eines Abgasturboladers ist, geführt. Das Frischgas wird mittels des Verdichters 22 verdichtet, anschließend in einem Ladeluftkühler 24 abgekühlt und den Brennräumen zugeführt. Der Antrieb des Verdichters 22 erfolgt mittels einer Turbine 26 des Abgasturboladers, die in einen Abgasstrang der Brennkraftmaschine 60 integriert ist. Abgas, das bei der Verbrennung des Kraftstoff-Frischgas-Gemischs in den Brennräumen des Verbrennungsmotors 10 entsteht, wird über den Abgasstrang aus dem Verbrennungsmotor 10 abgeführt und strömt dabei durch die Turbine 26. Dies führt in bekannter Weise zu einem rotierenden Antrieb eines Turbinenlaufrads 30 (vgl. Fig. 3), das über eine Welle 28 drehfest mit einem Verdichterlaufrad (nicht dargestellt) des Verdichters 22 verbunden ist. Die Rotation des Turbinenlaufrads 30 wird somit auf das Verdichterlaufrad übertragen.

Stromab des Verdichters 22 ist in die Ladeluftstrecke, d.h. in den Abschnitt des Frischgasstrangs zwischen dem Verdichter 22 und dem Verbrennungsmotor 10, eine ebenfalls mittels der Steuerungsvorrichtung 14 ansteuerbare Regelklappe 40 integriert. Bei einer Ausgestaltung des Verbrennungsmotors 10 als Ottomotor kann es sich bei dieser Regelklappe 40 um eine Drosselklappe handeln. Bei der bevorzugten Ausgestaltung des Verbrennungsmotors 10 als Dieselmotor kann die primäre Funktion der Regelklappe 40 darin bestehen, kurzfristig nach einem Beenden des Betriebs des Dieselmotors die Ladeluftstrecke zu verschließen, wodurch ein Nachströmen von bereits verdichtetem Frischgas in die Brennräume des Dieselmotors vermieden werden kann.

Die Brennkraftmaschine 60 umfasst weiterhin eine Rückführleitung 42 für eine Niederdruckabgasrückführung , über die Abgas aus einem Abschnitt des Abgasstrangs, der stromab der Turbine 26 und insbesondere auch stromab einer ersten Abgasnachbehandlungsvorrichtung 44 in Form eines Partikelfilters abgezweigt und in einen Abschnitt des Frischgasstrangs stromauf des Verdichterlaufrads, konkret beispielsweise in einen Einlasskanal des Verdichters 22, eingeleitet werden kann. Die Menge des über die Rückführleitung 42 rückzuführenden Abgases kann dabei mittels einer Ventileinrichtung 46, die mittels der Steuerungsvorrichtung 14 ansteuerbar ist, gesteuert oder geregelt werden.

Um im Betrieb des Verbrennungsmotors 10 mit unterschiedlichen Lasten und unterschiedlichen Drehzahlen eine möglichst optimale Nutzung der Enthalpie des Abgases zur Erzeugung von Verdichtungsleistung mittels des Abgasturboladers realisieren zu können, weist die Turbine 26 des Abgasturboladers eine mittels der Steuerungsvorrichtung 14 ansteuerbare Vorrichtung zur variablen Turbinenanströmung (VTG) 32 auf.

In der Fig. 3 ist die Integration der VTG 32 in die Turbine 22 des Abgasturboladers der Brennkraftmaschine 60 gemäß der Fig. 2 im Detail gezeigt. Die Turbine 22 umfasst ein Turbinengehäuse 48 sowie das drehbar innerhalb des Turbinengehäuses 48 angeordnete Turbinenlaufrad 30. Die Turbine 22 ist als Radialturbine ausgebildet, so dass ein Anströmen des Turbinenlaufrads 30 in radialer Richtung und ein Abströmen in axialer Richtung bezüglich der Rotationsachse 50 des Turbinenlaufrads 30 vorgesehen ist. Dazu wird das Abgas, ausgehend von einer das Turbinenlaufrad 30 umgebenden, von dem Turbinengehäuse 48 ausgebildeten Volute 52, über den Einlass 34 in den das Turbinenlaufrad 30 aufnehmenden Laufradraum eingebracht. Das Abgas durchströmt dann das Turbinenlaufrad 30, wodurch dieses rotierend angetrieben wird, und wird anschließend über einen axial bezüglich der Rotationsachse 50 ausgerichteten Auslasskanal 54 aus dem Turbinengehäuse 48 abgeführt. Im Bereich des Einlasses 34 sind, in Umfangsrichtung bezüglich der Rotationsachse 50 voneinander beabstandet, Leitschaufeln 36 der VTG 24 angeordnet, die jeweils mittels einer Welle drehbar gelagert sind und dadurch zum einen den freien Strömungsquerschnitt in dem Einlass 34 und zum anderen die Richtung der Anströmung des Turbinenlaufrads 30 durch das Abgas veränderbar ausgestalten. In Abhängigkeit von den Drehstellungen der Leitschaufeln 36 verengen diese nämlich den freien Strömungsquerschnitt in dem Einlass 34 der Turbine 26 mehr oder weniger und beeinflussen zudem den Abschnitt der primären Anströmung des Turbinenlaufrads 30 und die Ausrichtung dieser Anströmung. Die Drehbewegungen der Wellen und damit die Schwenkbewegungen der Leitschaufeln 36 sind über einen rückseitig des Turbinengehäuses 48 angeordneten und in der Fig. 3 nicht sichtbaren Drehring miteinander gekoppelt. Der Drehring selbst kann über einen Hebeltrieb 56 von einem E-Steller 38, der von der Steuervorrichtung 14 der Brennkraftmaschine 60 ansteuerbar ist, verdreht werden, um ein Verstellen der Leitschaufeln 36 zu bewirken.

Erfindungsgemäß ist vorgesehen, dass infolge einer Lasterhöhung im Betrieb des Verbrennungsmotors10, insbesondere ausgehend von einem Betrieb mit relativ niedrigen Drehzahlen und/oder einer relativ niedrigen Last, die VTG 32 vollständig beziehungsweise weitestmöglich geschlossen und die Durchströmung der Rückführleitung 42 mittels der Ventileinrichtung 46 reduziert wird. Das vollständige Schließen der VTG 32 unterstützt dabei einen möglichst schnellen Aufbau des Ladedrucks in der Ladeluftstrecke des Frischgasstrangs mit dem Ziel des Erreichens eines der Lastanforderung entsprechenden Soll-Ladedrucks, der in Kombination mit einer entsprechend gesteigerten Menge des in die Brennräume eingebrachten Kraftstoffs zur Erzeugung eines erhöhten Drehmoments und damit einer gesteigerten Leistungserzeugung durch den Verbrennungsmotor 10 führt. Der relativ kleine Minflow der Turbine 26, der beispielsweise ca. 50 kg/h betragen kann, unterstützt dabei die relativ schnelle Erhöhung des Ladedrucks infolge einer durch diesen geringen Minflow bewirkten Erzeugung eines relativ großen Staudrucks des Abgases im Einlass der Turbine 26 und, wiederum dadurch bedingt, infolge einer relativ hohen Strömungsgeschwindigkeit, mit der das Abgas das Turbinenlaufrad 30 anströmt. Dies gilt auch für das Verstellen der VTG 32 mittels des E-Stellers 38, der, im Vergleich zu konventionellen pneumatischen Stellern, die Leitschaufeln 36 relativ schnell verstellt.

Die infolge der Lasterhöhung reduzierte Durchströmung der Rückführleitung 42 und damit die verringerte Niederdruckabgasrückführung dient dazu, in Kombination mit dem relativ schnellen Ladedruckaufbau in möglichst kurzer Zeit ein möglichst hohes Drehmoment durch den Verbrennungsmotor 10 als Folge der erhöhten Lastanforderung bereitzustellen.

Nach dem Erreichen eines der angeforderten Lasterhöhung entsprechenden Soll-Ladedrucks in dem Frischgasstrang wird die Durchströmung der Rückführleitung 42 mittels der Ventileinrichtung 46 wieder erhöht. Dadurch soll das Emissionsverhalten des Verbrennungsmotors 10, insbesondere hinsichtlich der in dem Abgas enthaltenen Stickoxide, optimiert werden, nachdem temporär eine erhöhte Erzeugung von Stickoxiden durch den Verbrennungsmotor 10 während der Anpassung des Ladedrucks infolge der erhöhten Lastanforderung in Kauf genommen wurde, um eine möglichst vorteilhafte Dynamik der Brennkraftmaschine 60 zu gewährleisten. Da diese erhöhte Erzeugung von Stickoxiden zu einer entsprechend erhöhten Belastung einer ebenfalls in den Abgasstrang integrierten zweiten Abgasnachbehandlungsvorrichtung 58, die in Form eines NOx-Speicherkatalysators und/oder eines SCR-Katalysators ausgebildet sein kann, führt, wodurch diese eine erhöhte Menge an Stickoxiden zwischenspeichern und/oder reduzieren muss, sollte der Zeitraum, in dem die Niederdruckabgasrückführung zur Erzielung einer möglichst vorteilhaften Dynamik der Brennkraftmaschine 60 reduziert ist, so kurz wie möglich gehalten werden. Dies wird durch die Ausgestaltung der Turbine 26 mit dem relativ kleinen Minflow und ergänzend in Kombination mit der Ausgestaltung des Stellers als E-Steller 38 erreicht.

### Bezugszeichenliste

- 10: Verbrennungsmotor
- 12: Zylinder
- 14: Steuerungsvorrichtung
- 16: Injektor
- 18: Ansaugmündung
- 20: Luftfilter
- 22: Verdichter
- 24: Ladeluftkühler
- 26: Turbine
- 28: Welle
- 30: Turbinenlaufrad
- 32: Vorrichtung zur variablen Turbinenanströmung (VTG)
- 34: Einlass der Turbine
- 36: Leitschaufel
- 38: E-Steller
- 40: Regelklappe
- 42: Rückführleitung
- 44: erste Abgasnachbehandlungsvorrichtung
- 46: Ventileinrichtung
- 48: Turbinengehäuse
- 50: Rotationsachse des Turbinenlaufrads
- 52: Volute
- 54: Auslasskanal
- 56: Hebeltrieb
- 58: zweite Abgasnachbehandlungsvorrichtung
- 60: Brennkraftmaschine

## Patentansprüche

1. Verfahren zum Betreiben einer Brennkraftmaschine (60) mit
- einem Verbrennungsmotor (10),
- einem Frischgasstrang,
- einem Abgasstrang,
- einem Abgasturbolader mit einer in den Abgasstrang integrierten Turbine (26) und einem in den Frischgasstrang integrierten Verdichter (22), wobei die Turbine (26) eine Vorrichtung zur variablen Turbinenanströmung (32) aufweist, die mittels eines Stellers verstellbar ist,
- einer Rückführleitung (42) für eine Niederdruckabgasrückführung, die stromab der Turbine (26) aus dem Abgasstrang abgeht und stromauf des Verdichters (22) in den Frischgasstrang mündet, wobei die Durchströmung der Rückführleitung (42) mittels einer Ventileinrichtung (46) beeinflussbar ist,
**dadurch gekennzeichnet, dass**
die Turbine (26) für einen Minflow von < 60 kg/h bei vollständig geschlossener Vorrichtung zur variablen Turbinenanströmung (32) ausgelegt ist, wobei der Minflow die Durchströmung der Turbine mittels Lufts ausgehend von einem Turbineneinlass hin zu einem Turbinenauslass ist, die sich bei 20°C und einem Differenzdruck im Turbineneinlass im Vergleich zum Turbinenauslass von 300 mbar einstellt, und dass
- infolge einer Lasterhöhung im Betrieb des Verbrennungsmotors (10) die Vorrichtung zur variablen Turbinenanströmung (32) vollständig geschlossen und die Durchströmung der Rückführleitung (42) mittels der Ventileinrichtung (46) reduziert wird und dass
- nach dem Erreichen eines der angeforderten Lasterhöhung entsprechenden Soll-Ladedrucks in dem Frischgasstrang die Durchströmung der Rückführleitung (42) mittels der Ventileinrichtung (46) wieder erhöht wird.

2. Verfahren gemäß Anspruch 1, **dadurch gekennzeichnet, dass** der Steller als E-Steller (38) ausgebildet ist, so dass ein Verstellen der Vorrichtung zur variablen Turbinenanströmung (32) durch Wandlung von elektrischer Energie in kinetische Energie bewirkbar ist.

3. Verfahren gemäß Anspruch 1 oder 2, **dadurch gekennzeichnet, dass** der Steller derart mit der Vorrichtung zur variablen Turbinenanströmung (32) zusammenwirkend ausgebildet ist, dass eine von dem Steller auf die Vorrichtung zur variablen Turbinenanströmung (38) ausgeübte Schließkraft einer durch das Abgas im Abgasstrang erzeugten Öffnungskraft entgegenwirkt.

4. Verfahren gemäß einem der vorhergehenden Ansprüche, **gekennzeichnet durch** eine in den Abgasstrang integrierte Abgasnachbehandlungsvorrichtung (44; 58).

5. Verfahren gemäß Anspruch 4, **dadurch gekennzeichnet, dass** die Abgasnachbehandlungsvorrichtung (58) einen NOx-Speicherkatalysator und/oder einen SCR-Katalysator umfasst.

6. Computerprogramm mit einem Programmcode zum Ausführen eines Verfahrens gemäß einem der vorhergehenden Ansprüche, wenn das Computerprogramm auf einer Steuerungsvorrichtung (14) der Brennkraftmaschine (60) ausgeführt wird.

## Claims

1. Method for operating an internal combustion engine (60) with
- a combustion engine (10),
- a fresh gas section,
- an exhaust gas section,
- an exhaust gas turbocharger with a turbine (26) which is integrated into the exhaust gas section and with a compressor (22) which is integrated into the fresh gas section, the turbine (26) comprising an apparatus for variable turbine inflow (32) which can be adjusted by means of an actuator,
- a recirculation line (42) for a low-pressure exhaust gas recirculation means which branches off from the exhaust gas section downstream of the turbine (26) and opens into the fresh gas section upstream of the compressor (22), it being possible for the throughflow of the recirculation line (42) to be influenced by means of a valve device (46),
**characterized in that**
the turbine (26) is designed for a minimum flow of less than 60 kg/h in the case of a completely closed apparatus for variable turbine inflow (32), the minimum flow being the throughflow of the turbine by means of air starting from a turbine inlet towards the turbine outlet, which throughflow is set at 20°C at the differential pressure in the turbine inlet in comparison with the turbine outlet of 300 mbar, and **in that**,
- as a consequence of a load increase during operation of the combustion engine (10), the apparatus for variable turbine inflow (32) is completely closed and the throughflow of the recirculation line (42) is reduced by means of the valve device (46), and **in that**,
- after a setpoint boost pressure which corresponds to the requested load increase has been achieved in the fresh gas section, the throughflow of the recirculation line (42) is increased again by means of the valve device (46).

2. Method according to Claim 1, **characterized in that** the actuator is configured as an electric actuator (38), with the result that an adjustment of the apparatus for variable turbine inflow (32) can be brought about by way of the conversion of electric energy into kinetic energy.

3. Method according to Claim 1 or 2, **characterized in that** the actuator is configured so as to interact with the apparatus for variable turbine inflow (32) in such a way that a closing force which is exerted by the actuator on the apparatus for variable turbine inflow (38) counteracts an opening force which is produced by way of the exhaust gas in the exhaust gas section.

4. Method according to one of the preceding claims, **characterized by** an exhaust gas aftertreatment apparatus (44; 58) which is integrated into the exhaust gas section.

5. Method according to Claim 4, **characterized in that** the exhaust gas aftertreatment apparatus (58) comprises an NOₓ storage catalytic converter and/or an SCR catalytic converter.

6. Computer program with a program code for carrying out a method according to one of the preceding claims when the computer program is executed on a control apparatus (14) of the internal combustion engine (60).

## Revendications

1. Procédé permettant de faire fonctionner un moteur à combustion interne (60), comprenant
- un moteur thermique (10),
- un circuit de gaz frais,
- un circuit de gaz d'échappement,
- un turbocompresseur à gaz d'échappement pourvu d'une turbine (26) intégrée dans le circuit de gaz d'échappement et d'un compresseur (22) intégré dans le circuit de gaz frais, la turbine (26) présentant un dispositif (32) pour un écoulement variable sur la turbine qui est réglable au moyen d'un actionneur,
- une conduite de recyclage (42) pour un recyclage des gaz d'échappement basse pression qui quitte le circuit de gaz d'échappement en aval de la turbine (26) et débouche sur le circuit de gaz frais en amont du compresseur (22), dans lequel le passage par la conduite de recyclage (42) peut être influencé au moyen d'un dispositif de soupape (46),
**caractérisé en ce que** la turbine (26) est conçue pour un débit minimal de < 60 kg/h lorsque le dispositif (32) pour un écoulement variable sur la turbine est complètement fermé, dans lequel le débit minimal est le passage par la turbine avec de l'air en partant d'une entrée de turbine jusqu'à une sortie de turbine qui se produit à 20 °C et à une pression différentielle de 300 mbar dans l'entrée de turbine en comparaison avec la sortie de turbine, et **en ce que**
- suite à une augmentation de charge en cours de fonctionnement du moteur thermique (10), le dispositif (32) pour un écoulement variable sur la turbine est complètement fermé, et le passage par la conduite de recyclage (42) est réduit au moyen du dispositif de soupape (46), et **en ce que**
- après qu'une pression de charge théorique correspondant à l'augmentation de charge demandée a été atteinte dans le circuit de gaz frais, le passage par la conduite de recyclage (42) est à nouveau augmenté au moyen du dispositif de soupape (46).

2. Procédé selon la revendication 1, **caractérisé en ce que** l'actionneur est réalisé sous forme d'actionneur électrique (38) de sorte qu'un réglage du dispositif (32) pour un écoulement variable sur la turbine peut être obtenu en convertissant de l'énergie électrique en énergie cinétique.

3. Procédé selon la revendication 1 ou 2, **caractérisé en ce que** l'actionneur est réalisé en coopération avec le dispositif (32) pour un écoulement variable sur la turbine de telle sorte qu'une force de fermeture exercée par l'actionneur sur le dispositif (38) pour un écoulement variable sur la turbine s'oppose à une force d'ouverture générée par les gaz d'échappement dans le circuit de gaz d'échappement.

4. Procédé selon l'une quelconque des revendications précédentes, **caractérisé par** un dispositif de post-traitement des gaz d'échappement (44 ; 58) intégré dans le circuit de gaz d'échappement.

5. Procédé selon la revendication 4, **caractérisé en ce que** le dispositif de post-traitement de gaz d'échappement (58) comprend un catalyseur à accumulation de NOₓ et/ou un catalyseur SCR.

6. Programme informatique, comprenant du code programme pour exécuter un procédé selon l'une quelconque des revendications précédentes si le programme informatique est exécuté sur un dispositif de commande (14) du moteur à combustion interne (60).
